# EUROPEAN PATENT APPLICATION

(11) **EP 4 586 438 A1**
(43) Date of publication of application: **16.07.2025**
(21) Application number: 24150962.9
(22) Date of filing: 09.01.2024
(51) Int. Cl.: H02J 3/32, H02J 7/00

(54) **ENERGY STORAGE MODULE FOR AN ENERGY STORAGE SYSTEM**

(71) Applicant: Hitachi Energy Ltd, 8050 Zürich (CH)
(72) Inventor: Bai, Haofeng, 723 48 Västerås (SE); Viatkin, Aleksandr, 72338 Västerås (SE); Chou, Shih-Feng, 72342 Västerås (SE); Khan, Akif Zia, 31-416 Krakow (PL); Prakash, Surya, 852212 Bihar (IN); Svensson, Jan, 72346 Västerås (SE)
(74) Representative: AWA Sweden AB

(57) **Abstract**

There is disclosed herein an energy storage module (10) for an energy storage system (1) configured to be connected to a power grid (2). The energy storage module comprises a coupling circuit (20) configured to selectively couple the energy storage module into the energy storage system, and a plurality of energy storage strings (30) connected in parallel to the coupling circuit. Each of said plurality of energy storage strings comprises a disconnection switch (32), at least one energy storage unit (34) and a balancing switch (36) connected in series. There is also disclosed herein an energy storage system comprising a plurality of energy storage modules.

## Description

### Technical field

The present disclosure relates to an energy storage module for an energy storage system. The present disclosure further relates to an energy storage system.

### Background

With the growing use of intermittent renewable energy sources such as solar energy and wind energy, there is a growing demand for energy storage systems. Energy storage modules are often designed with a plurality of energy storage strings connected in parallel and where each energy storage string has a plurality of energy storage units in series to achieve the desired capacity rating and voltage rating.

When multiple energy storage strings are connected in parallel, each string may have slightly different characteristics, including state of charge, state of health, and capacity. Balancing energy ensures that all strings contribute evenly to the system's energy storage and discharge, maximizing the utilization of the entire storage capacity.

One method for balancing the energy between different energy storage strings is to use a balancing circuit based on bleeding resistor technology, wherein a bleeding resistor is selectively connected in parallel with the energy storage. However, there are several limitations with the bleeding resistor technology. For example, the balancing speed may be too slow, which means that it is time consuming to achieve a balance between the energy storage strings, or the control cannot keep up with the rate at which strings become out of balance. Further, the bleeding resistor technology may impact the lifetime of the energy storage module and thereby also the energy storage system.

Therefore, there is a need of an energy storage module that provides an improved, faster, balancing between the energy storage strings. Further, there is a need of an energy storage module with increased lifetime.

### Summary

It is therefore an object of the present disclosure to provide an energy storage module for an energy storage system that alleviates at least part of the above-mentioned drawbacks. It is, for example, an object of the present disclosure to provide an energy storage module that provides an improved utilization of the energy storage system and an improved balancing between energy storage strings. Further, it is an object of the present disclosure to provide an energy storage system with increased lifetime.

According to a first aspect of the present disclosure an energy storage module for an energy storage system is provided. The energy storage module comprises a coupling circuit configured to selectively couple the energy storage module into the energy storage system, and a plurality of energy storage strings connected in parallel to the coupling circuit. Each of the plurality of energy storage strings comprises a disconnection switch, at least one energy storage unit and a balancing switch connected in series.

According to a second aspect of the present disclosure an energy storage system, configured to be connected to a power grid, is provided. The energy storage system comprises a plurality of energy storage module strings connected in parallel to each other, wherein each energy storage module string comprises a plurality of serially connected energy storage modules according to the first aspect. The energy storage system further comprises a converter connected in parallel to said plurality of energy storage module strings and configured to connect the energy storage module strings to the power grid.

That is, a modular energy storage system is formed, wherein energy storage strings or branches, each comprising one or more energy storage units (such as batteries or supercapacitors, which may be better suited for some power grid applications) are connected together in parallel to form an energy storage module. These modules are then themselves strung together into energy storage module strings, which are connected together in parallel to form the energy storage system.

To achieve a desired voltage rating and/or capacity rating, energy storage modules are often connected in series and parallel with each other when designing an energy storage system. To achieve as high utilization rate as possible from the energy storage module, as well as the energy storage system, balance between the energy storage strings in the energy storage module is beneficial. The balancing switch at each energy storage string provides the possibility to balance energy between the energy storage strings.

According to aspects of the present disclosure, the energy storage strings may be selectively charged by turning on one of the balancing switches in the respective energy storage string. As an example, the energy storage string having the lowest state of charge, SoC, may be charged first by closing the balancing switch for that energy storage string and opening the balancing switches of the other energy storage strings.

By contrast, bleeding resistor technology concerns the discharging of energy storage strings to the lowest cell voltage within the energy storage module and, thereafter (i.e., when the strings are balanced within the module), charging all the energy storage strings. The balancing switch disclosed herein may thus advantageously allow the energy storage strings to be individually charged one at a time or all at a time until each energy storage string reach, for example, the desired SoC. By enabling individual charging of the energy storage strings in this way, there is provided a reliable balancing at energy storage module level. The balancing switch further provides a quicker balancing between the energy storage strings as a slow discharging process (e.g., using a bleeding resistor) may not be required.

Further, using a resistor to discharge an energy storage string requires thermal management of the energy storage module, as heat is generated during discharge. By instead adopting an approach of selective and configurable charging, less heat is generated within the energy storage module. Heat affects the state of health, SoH, of the energy storage modules and may reduce the lifetime of the energy storage module. The provision of the balancing switch may therefore increase the lifetime of the energy storage module, by removing or limiting the use of the bleeding resistor.

The balancing switch may comprise a power electronic switch and/or a mechanical switch. The choice between a power electronic switch and a mechanical switch may depend on the design of the energy storage module. The power electronic switch may be more suitable for energy storage modules and applications where fast switching is preferred. Further, the power electronic switch may provide a greater number of possible operations such as, for example, pulse width modulation, PWM. The mechanical switch may not provide the same number of operations but may have lower losses. The mechanical switch has a lower switching speed and may therefore be more suitable in an energy storage module where the energy storage unit has a high capacity and the preference for speed of balancing is lower.

The balancing switch may be a bidirectional switch or a unidirectional switch. The bidirectional switch may as an example be implemented by having two power electronic switches in anti-series, or the bidirectional switch may be a single mechanical switch. The unidirectional switch may be implemented with a single power electronic switch, for example. The bidirectional switch allows the energy storage string to always be selectively inserted into operation in the energy storage module at all times (i.e., during charging and discharging), while the unidirectional switch may only allow the energy storage string to be selectively inserted during charging or discharging mode.

The disconnection switch in the energy storage module may be able to disconnect the energy storage string from the other energy storage string(s) in the energy storage module such that the energy storage string is effectively bypassed. The disconnection switch may thus also be considered as a bypass switch. The disconnection switch may advantageously improve the safe operation of the energy storage module, which may be used if a fault occurs in the energy storage string such as, for example, a short circuit fault. By positioning the balancing switch in series with the disconnection switch, an eventual fault in the balancing switch may not affect the energy storage module as the disconnection switch may be operated to bypass the energy storage string if such fault occurs.

The coupling circuit may be used for (dis)connecting the energy storage module from/to the energy storage system, such that the full energy storage module may be bypassed. By using the coupling circuit to selectively couple each energy storage module to the energy storage system, the energy storage system may be able to choose which energy storage modules that are used during charge and discharge. Further, the coupling circuit may allow the full energy storage module to be bypassed during a fault in the energy storage module, such that the fault is limited to the energy storage module. Hence, the risk of a fault in the energy storage module affecting the other energy storage modules and/or the full energy storage system is limited.

The coupling circuit may comprise at least one branch of switching elements having a first switching element and a second switching element connected in series, and a first terminal and a second terminal connected to the at least one branch of switching elements and configured to connect the energy storage module to the energy storage system. These switching elements may be controlled (by a controller of the energy storage system) to selectively connect the energy storage module into the energy storage system.

The first terminal may be connected between the first and second switching elements and the second terminal may be connected between the second switching element and said at least one energy storage string. With such a configuration, the full energy storage module may be bypassed by turning the second switching element on and the first switching element off. Thereby, the current directed to the energy storage module can bypass the energy storage module. In the energy storage system, the first and second terminal can be used to connect the energy storage module to the other series connected energy storage modules.

Each of the first switching element and/or the second switching element may comprise a switch and a diode connected in parallel. The switch may be a mechanical switch or a power electronic switch, depending on the preferred implementation, and noting the benefits of each type discussed above.

The diode may allow current to flow in only one direction, while the switch can control the current in both directions. This enables a bidirectional flow of current when needed, which may be advantageous in applications where current direction needs to change periodically, such as an energy storage module. The diode may further take some of the stress off the switch as the diode manages reverse voltage and current during switching transitions. This can further extend the lifespan of the switch and thereby of the energy storage module.

The at least one energy storage unit may be a battery module. Battery modules are one type of energy storage units that are suitable for the energy storage module, as well as capacitors and/or supercapacitors. Indeed, in some examples, a mix of storage unit types may be implemented, which may not be possible to implement according to prior art balancing techniques.

That is, the at least one energy storage unit of a first energy storage string of the plurality energy storage string may be a first type of energy storage unit, and the at least one energy storage unit of a second energy storage string of the plurality energy storage string may be a second type of energy storage unit.

The configuration of the energy storage module with different energy storage strings allows the first energy storage string to have a first type of energy storage unit and a second energy storage string to have a second type of energy storage. When each energy storage string may be individually selected into and out of operation, it is possible to only operate each type of energy storage at a time. As an example, the first type of energy storage unit may be a battery module (e.g., lithium ion or lead acid), and the second type of energy storage unit may be a capacitor unit.

The energy storage system may further comprise a control unit configured to control the balancing switch of each energy storage string between a conducting mode (allowing current to flow through said at least one energy storage string) and a non-conducting mode.

The control unit may operate each balancing switch to determine which energy storage string(s) is/are operated in the conducting mode and which is/are operated in the non-conducting mode. The conducting mode may also be referred to as an energy storage string being 'active'. This control may occur during both charging and discharging to control which of the energy storage strings that are active.

The control unit may control each balancing switch based on state of charge, SoC, and/or state of health, SoH, information from said at least one energy storage string in each energy storage module.

By controlling the balancing switches based on the SoC and/or the SoH, the control unit may during discharge control the balancing switches such that only the energy storage strings with the highest SoC are operating. In charging mode, the control unit may instead control the energy storage strings such that only the energy storage strings having the lowest SoC are active. In these applications, the control unit may be provided with information of the SoH and SoC of the energy storage units in each energy storage string.

The control unit may be configured to balance the SoC and/or SoH between each energy storage module string and/or between each energy storage module. With the information about SoC and/or SoH of the energy storage units in each energy storage string, the control unit may be able to balance the SoC between the energy storage strings. Further, the control unit may balance the operation to level the SoH between the energy storage strings to reduce the time interval between maintenance sessions (i.e., such that the strings of the entire module are at a same SoH, e.g., ready for repair or replacement).

The control unit may be configured to adjust the load distribution between each energy storage module string and/or between each energy storage module. One way of balancing the SoH between the energy storage strings is by adjusting the load distribution between the energy storage module string and/or between each energy storage module.

The control unit is described at energy storage system level. However, it should be noted that the control unit may also be at energy storage module level where a control unit for each energy storage module operates the respective energy storage module. These control units at energy storage module level may in their turn be control by a control system that processes the information from each control unit.

Effects and features of the second aspect may be largely analogous to those described above in connection with the first aspect. Embodiments mentioned in relation to the first aspect may be at least largely compatible with the second aspect. It is further noted that the present disclosure relates to all possible combinations of features unless explicitly stated otherwise.

A further scope of applicability of the present disclosure will become apparent from the detailed description given below. However, it should be understood that the detailed description and specific examples, while indicating preferred embodiments of the disclosure, are given by way of illustration only, since various changes and modifications within the scope of the disclosure will become apparent to those skilled in the art from this detailed description.

Hence, it is to be understood that the present disclosure is not limited to the particular component parts of the module and system described may vary. It is also to be understood that the terminology used herein is for the purpose of describing particular embodiments only, and it is not intended to be limiting.

### Brief description of the drawings

The present disclosure will by way of example be described in more detail with reference to the appended drawings, which show example embodiments of the disclosure.
- Fig. 1: illustrates an overview of an energy storage module.
- Fig. 2: illustrates an energy storage module with a unidirectional balancing switch.
- Fig. 3: illustrates an energy storage module with a bidirectional balancing switch.
- Fig. 4: illustrates an energy storage system having a plurality of energy storage modules.

### Detailed description

The present disclosure will now be described more fully hereinafter with reference to the accompanying drawings, in which example embodiments of the present disclosure are shown. This disclosure may, however, be embodied in many different forms and should not be construed as limited to the embodiments set forth herein; rather, these embodiments are provided for thoroughness and completeness, to assist in conveying the scope of the disclosure to the skilled person.

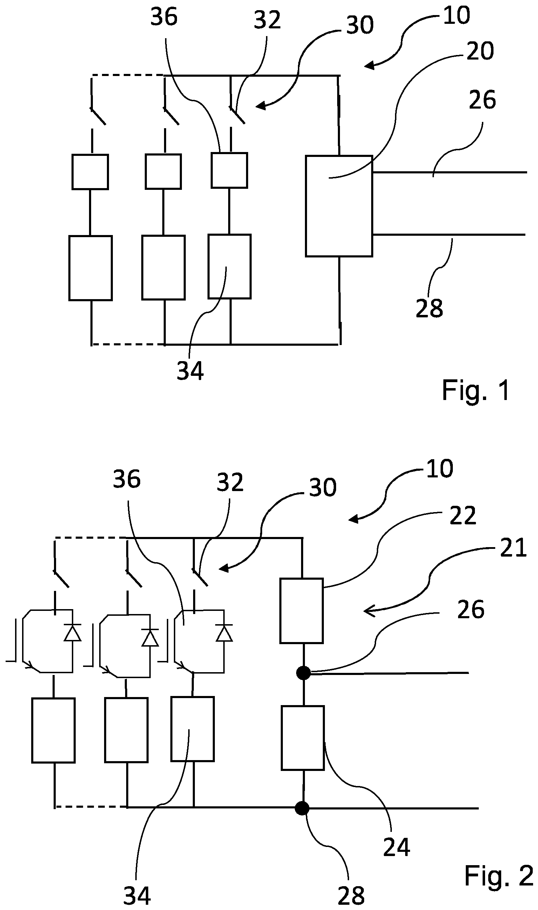

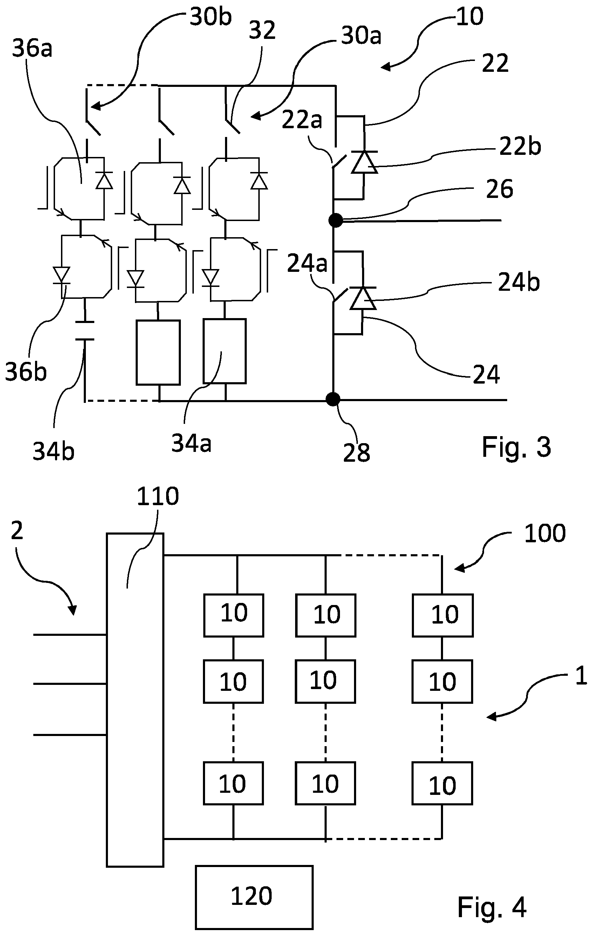

In Fig. 1 an energy storage module 10 for an energy storage system 1 is illustrated. The energy storage module 10 comprises a coupling circuit 20 that is configured to selectively couple the energy storage module 10 to the energy storage system 1. The coupling circuit 20 is connected to the energy storage system 1 through a first terminal 26 and a second terminal 28. The first terminal 26 and the second terminal 28 allows a plurality of energy storage modules 10 to be connected to each other. The coupling circuit 20 may be used for disconnecting the energy storage module 10 from the energy storage system (e.g., the energy storage system 1 shown in fig. 4), such that the full energy storage module 10 is bypassed.

The energy storage module 10 further comprises a plurality of energy storage strings 30 connected in parallel to the coupling circuit 20. In the figures there are only three energy storage strings 30 illustrated. However, the dotted lines represent that any number of energy storage strings may be inserted in between. The number of energy storage strings may be dependent on the required level of modularity and/or energy storage requirements for the module.

Each of the plurality of energy storage strings 30 comprises a disconnection switch 32, at least one energy storage unit 34 and a balancing switch 36 connected in series. The disconnection switch 32 is able to disconnect the energy storage string 30 such that no current passes through the energy storage string 30. In other words, the disconnection switch 32 allows for bypassing the energy storage string 30. The disconnection switch 32 may be used as a safety feature of the energy storage module 10 and is mainly used to disconnect the energy storage string 30 when a fault occurs in the energy storage string 30, thereby limiting the possibility for the fault to affect other components in the energy storage module 10. For example, in a case where there is a short circuit in the balancing switch 36 or the energy storage unit 34, the disconnection switch 32 may be opened to stop the current flow through the energy storage string 30.

In operation, the coupling circuit 20 is connected to the energy storage system 1 such that the energy storage module 10 is not bypassed, thereby current flows through the energy storage strings 30 of the energy storage module 10. In such case at least one of the energy storage strings 30 needs to be active such that current is allowed to flow through the energy storage module 10. However, it is not necessary that all the energy storage strings 30 are active at the same time. Indeed, the balancing switch 36 of each energy storage string 30 allows each energy storage string 30 to be individually and temporarily bypassed and to be individually activated. When the energy storage module 10 is in a charging mode, the balancing switch 36 of each energy storage string 30 may be individually operated between the open and closed position. The energy storage strings 30 may be selectively charged by turning on one of the balancing switches 36 in the respective energy storage string 30. Thereby, the possibility to balance the state of charge, SoC, between the energy storage strings 30 is provided, i.e., the energy storage units 34 of the energy storage strings 30.

Similarly, the balancing switch 36 may be used during discharge to control the voltage and current provided by the energy storage module 10 to the energy storage system 1. As an example, each energy storage module 10 may be provided with redundant energy storage strings 30, such that the energy storage module 10 is able to keep operating even if one of the energy storage strings 30 needs to be bypassed by the disconnection switch 32 due to a fault.

Turning to Fig. 2 the energy storage module 10 comprising the plurality of energy storage strings 30 is illustrated. Each energy storage string 30 comprises the disconnection switch 32, the energy storage unit and the balancing switch 36. These components may be similar to or the same as (at least in respect of their functionality) the like-numbered components discussed in relation to fig. 1, and thus these components are not discussed again in detail. However, in Fig. 2 the balancing switch 36 is specifically shown as being a unidirectional balancing switch. The unidirectional balancing switch 36 is implemented with a single power electronic switch. The unidirectional switch 36 only allows the energy storage string 30 to be selectively inserted during charging mode.

The energy storage module 10 further comprises the coupling circuit 20 which comprises a first switching element 22 and a second switching element 24. The first terminal 26 is connected between the first 22 and second 24 switching elements and the second terminal 28 is connected between the second switching element 24 and the energy storage strings 30. By allowing current to pass through the first switching element 22 and not allowing current to pass through the second switching element 24, the current is forced to flow through the energy storage module 10. However, if current is allowed to flow through the second switching element 24 and not the first switching element 22, the full energy storage module 10 may be bypassed.

Components shown in fig. 3 may be similar to or the same as (at least in respect of their functionality) like-numbered components discussed in relation to figs. 1 and 2, and thus these components are not discussed again in detail in relation to fig. 3. In Fig. 3, the energy storage module 10 comprises at least one first energy storage string 30a having a first type of energy storage unit 34a, for example a battery module. The energy storage module 10 further comprises at least one energy storage string 30b that comprises a second type of energy storage unit 34b, for example a capacitor module (capacitor or supercapacitor).

Each energy storage string 30 further comprises the balancing switch 36. The balancing switch 36 is implemented, in this example, as two power electronic switches 36a, 36b arranged in anti-series, thereby together providing a bidirectional switch. The bidirectional switch may also be provided through a single mechanical switch, in some modifications. The choice between a power electronic switch and a mechanical switch depends on the design of the energy storage module 10 and the energy storage system 1, as discussed above.

In Fig. 3, each of the first switching element 22 and the second switching element 24 comprises a switch 22a, 24a and a diode 22b, 24b connected in parallel. The diode 22b, 24b allows current to flow in only one direction, while the switch 22a, 24a can control the current in both directions. This enables a bidirectional flow of current when needed.

In Fig. 4 an energy storage system 1 is illustrated. The energy storage system 1 comprises a plurality of energy storage module strings 100 connected in parallel to each other. Each energy storage module string 100 comprise a plurality of serially connected energy storage modules 10 such as those described in connection to Figs. 1 to 3. To achieve a desired voltage rating and/or capacity rating, energy storage modules 10 may be connected in series and/or parallel with each other when designing an energy storage system 1. In this case, there are energy storage module strings 100 connected in parallel, and in each energy storage module 10 there are also energy storage strings 30 connected in parallel, while the energy storage modules 10 are connected in series.

The energy storage system 1 further comprises a converter 110 connected in parallel to said plurality of energy storage module strings 100 and configured to connect the energy storage module strings 100 to the power grid 2. With the energy storage system 1 according to Fig. 4, each energy storage module 10 may be bypassed through the coupling circuit 20 of each energy storage module 10 by selectively couple or bypass each energy storage module 10 as described in connection to Fig. 2. The energy storage system 1 may therefore be able to choose which energy storage modules 10 that are used during charge and discharge. The coupling circuit 20 further allows the full energy storage module 10 to be bypassed during a fault in the energy storage module 10, such that the fault is limited to the energy storage module. Further, each energy storage string 30 of each energy storage module 10 may be bypassed by the disconnection switch 32 as discussed in connection to Fig. 1.

The energy storage system 1 further comprises a control unit 120 configured to control the balancing switch 36 of each energy storage string 30 between a conducting mode allowing current to flow through the energy storage string 30 and a non-conducting mode, i.e., if the energy storage string 30 is bypassed or not. The control unit 120 is provided with state of charge, SoC and/or state of health, SoH, information from each energy storage unit 34 of the respective energy storage string 30. Thus, the control unit 120 is able to control the balancing switches 36 based on the SoC and/or the SoH. With the information about SoC and/or SoH of the energy storage units 34 in each energy storage string 30, the control unit 120 is able to balance the SoC between the energy storage strings 30. Further, the control unit 120 may balance the operation to level the SoH between the energy storage strings 30. An energy storage unit 34 capacity and performance decline over time due to chemical processes, usage, and environmental factors. By considering the SoH, the control unit 120 can manage the performance expectations of the energy storage system 1. It can adjust the charge levels to compensate for reduced capacity and maintain consistent performance. A further example, in charging mode the control unit 120 may control the energy storage strings 30 such that only the energy storage strings 30 having the lowest SoC are active, thereby charging all the energy storage strings 30 to the same level.

The control unit 120 may also be configured to adjust the load distribution between each energy storage module string 100 and/or between each energy storage module 10.

The control unit 120 may be realized as any suitable computing means and may be local or remote to the energy storage system 100, being in communication therewith via wired and/or wireless means.

The person skilled in the art realizes that the present disclosure by no means is limited to the preferred embodiments described above. On the contrary, many modifications and variations are possible within the scope of the appended claims. Additionally, variations to the disclosed embodiments can be understood and affected by the skilled person in practicing the disclosure from a study thereof.

## Claims

1. An energy storage module (10) for an energy storage system (1) configured to be connected to a power grid (2), the energy storage module comprising;
a coupling circuit (20) configured to selectively couple the energy storage module into the energy storage system, and
a plurality of energy storage strings (30) connected in parallel to the coupling circuit,
wherein each of said plurality of energy storage strings comprises a disconnection switch (32), at least one energy storage unit (34) and a balancing switch (36) connected in series.

2. The energy storage system according to claim 1, wherein said at least one energy storage unit of a first energy storage string (30a) of said plurality energy storage string is a first type of energy storage unit (34a), and wherein said at least one energy storage unit of a second energy storage string (30b) of said plurality energy storage string is a second type of energy storage unit (34b).

3. The energy storage module according to claim 1, wherein said at least one energy storage unit is a battery module.

4. The energy storage system according to any one of claims 1 to 3, wherein said coupling circuit (20) comprises at least one branch of switching elements (21) having a first switching element and a second switching element (22, 24) connected in series, and
a first terminal and a second terminal (26, 28) connected to the at least one branch of switching elements and configured to connect the energy storage module to the energy storage system.

5. The energy storage system according to claim 4, wherein each of the first switching element (22) and the second switching element (24) comprises a switch (22a, 24a) and a diode (22b, 24b) connected in parallel.

6. The energy storage module according to claim 4 or 5, wherein the first terminal is connected between the first and second switching elements and the second terminal is connected between the second switching element and said at least one energy storage string.

7. The energy storage module according to any one of the preceding claims, wherein the balancing switch comprises a power electronic switch and/or a mechanical switch.

8. The energy storage module according to any one of the preceding claims, wherein the balancing switch is a bidirectional switch or a unidirectional switch.

9. An energy storage system (1) configured to be connected to a power grid (2), the energy storage system comprising;
a plurality of energy storage module strings (100) connected in parallel to each other, wherein each energy storage module string comprises a plurality of serially connected energy storage modules (10) according to claim 1-8,
and a converter (110) connected in parallel to said plurality of energy storage module strings and configured to connect the energy storage module strings to the power grid.

10. The energy storage system (1) according to claim 9, further comprising a control unit (120) configured to control the balancing switch of each energy storage string between a conducting mode allowing current to flow through said at least one energy storage string and a non-conducting mode.

11. The energy storage system according to claim 10, wherein the control unit controls each balancing switch based on state of charge, SoC, and/or state of health, SoH, information from said at least one energy storage string in each energy storage module.

12. The energy storage system according to claim 11, wherein the control unit is configured to balance the SoC and/or SoH between each energy storage module string and/or between each energy storage module.

13. The energy storage system according to any one of claims 10 to 12, wherein the control unit is configured to adjust the load distribution between each energy storage module string and/or between each energy storage module.
